# EUROPEAN PATENT APPLICATION

(11) **EP 2 573 908 A2**
(43) Date of publication of application: **27.03.2013**
(21) Application number: 12184905.3
(22) Date of filing: 18.09.2012
(51) Int. Cl.: H02K 3/30

(54) **Electrical machine with winding conductor having ceramic insulation**

(30) Priority: 20.09.2011 US 201113236685
(71) Applicant: Remy Technologies, LLC, Pendleton, IN 46064 (US)
(72) Inventor: Hamer, Colin J., Noblesville, IN Indiana 46060 (US)
(74) Representative: Roberts, Peter David

(57) **Abstract**

An electrical machine is described that has a ceramic material as insulation around the winding wire. In some embodiments, the ceramic material is hexagonal boron nitride (HVR), aluminum oxide, aluminum nitride, or beryllium oxide. The ceramic material may be rolled, brush, sprayed, or dipped onto the wire using a binder-less or binder-containing solution. The whole wire may be coated, or just parts that are particularly subject to abrasion of the conductor and/or electrical contact with other conductive materials.

## Description

### Field

The present invention relates to dynamo-electric machines. More specifically, the present invention relates to dynamo-electric machines having particular insulation on their windings.

### Background of the Disclosure

Rotating electrical machines use the relative motion between a rotating component ("rotor") and a static component ("stator") to convert between electrical and mechanical energy. One of these components is typically made of metal, while the other is typically a magnet, and at least one of them typically has a wire wrapped around it.

One type of electrical machine, an electric motor, converts electrical energy to mechanical energy. Electric motors typically operate using the interaction between magnetic fields and current-carrying conductors to generate rotational force. The two main parts of a generator can be thought of in either mechanical or electrical terms. In mechanical terms, the "rotor" is the rotating part of an electrical machine, while the "stator" is the stationary part. In electrical terms, the "armature" is the power-producing component of an electrical machine, and the "field" is the magnetic field component. The armature can be on either the rotor or the stator. Electromagnets or permanent magnets mounted on either the rotor or the stator provide the magnetic field.

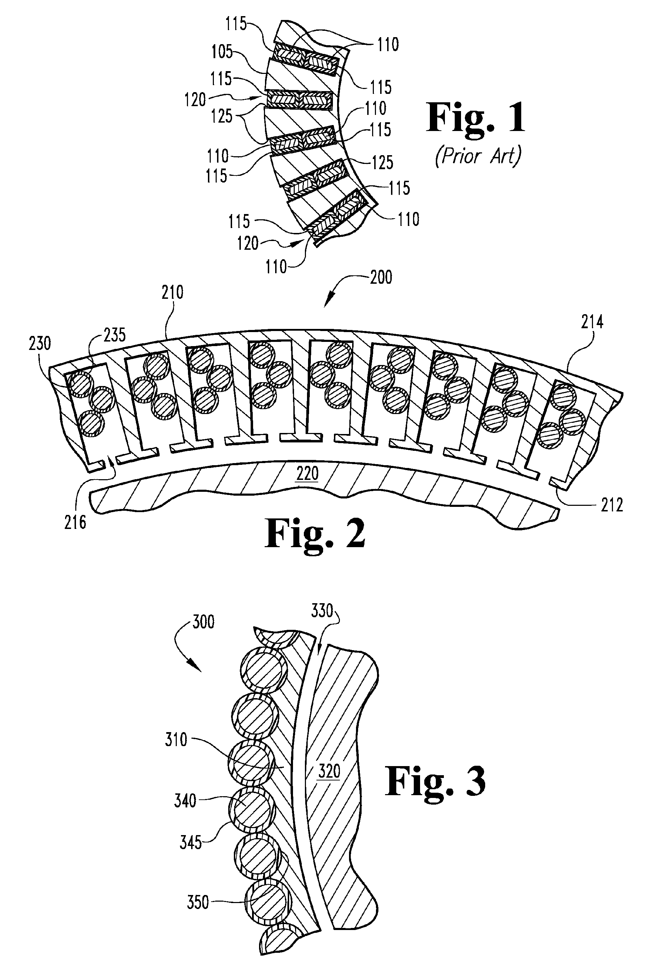

As illustrated in Fig. 1, the current-carrying conductor(s) 110 that make the "windings" of the armature are conventionally coated with one or more layers 115 of enamel, wrapped tapes, or epoxy to electrically insulate them from neighboring portions of the conductor 110 and other adjacent conductive components in the system, such as stator body 105. For example, a tape impregnated with polyimide, glass, mica, fluorinated ethylene propylene, or a blend thereof may be wrapped around a wire along its length, then the wire is wound around one of the motor's major components. In this example, the tape keeps electrical current from passing directly between adjacent windings and between the winding wire and the machine component (e.g., stator).

In some designs, the insulator 115 is not strong enough to withstand friction with the machine component 105 around which is wound. Therefore, to protect the insulator 115, the "slots" 120 that guide placement of the windings include additional material (a "slot liner") 125 that protects the insulation-wrapped conductor 110 that is laid in the slot 120. For example, the slot liners 125 may be made from fiber or rag-polyester as described in US Published Application No. 2011/0115314 A1.

There is thus a need for improved electric machines and better insulators for the conductors used in their windings.

### Summary

In various embodiments, an electric machine includes a stator and a rotor, at least one of which has windings of a conductor covered with a ceramic material, such as hexagonal boron nitride (HBR), aluminum oxide, aluminum nitride, or beryllium oxide. In some embodiments, a powder form of the ceramic is dissolved in water or another solvent, then is applied to the conductor by rolling, brushing, dipping, or spraying. In some implementations, the windings are around the stator, while in others, the windings are around the rotor.

According to an aspect of the invention there is provided an electrical machine comprising a rotor, and a stator having a conductive winding, the winding being covered along at least part of its length by a ceramic material.

The ceramic material that covers adjacent turns of the winding may be in physical contact.

The physical contact may be at the turns of the winding.

The physical contact may be at a portion of the winding that is straight.

The ceramic material may be hexagonal boron nitride.

The ceramic material may be aluminum oxide.

The ceramic material may be aluminum nitride.

The ceramic material may be beryllium oxide.

The winding may be covered by a process comprising the acts of dissolving a powder form of the ceramic material with a carrier selected from the carrier class consisting of water and a solvent operative to dissolve the powder form; and applying the dissolved ceramic material to the winding by one or more of the acts of rolling, brushing, dipping, and spraying.

According to an aspect of the invention there is provided an electrical machine comprising a stator, and a rotor having a conductive winding, the winding being covered along at least part of its length by a ceramic material.

The ceramic material that covers adjacent turns of the winding may be in physical contact.

The physical contact may be at the turns of the winding.

The physical contact may be at a portion of the winding that is straight.

The ceramic material may be hexagonal boron nitride.

The ceramic material may be aluminum oxide.

The ceramic material may be aluminum nitride.

The ceramic material may be beryllium oxide.

The winding may be covered by a process comprising the acts of dissolving a powder form of the ceramic material with a carrier selected from the carrier class consisting of water and a solvent operative to dissolve the powder form; and applying the dissolved ceramic material to the winding by one or more of the acts of rolling, brushing, dipping, and spraying.

### Brief Description of the Drawings

Fig. 1 is a cross-sectional schematic diagram of a prior art stator and some of its windings.
Fig. 2 is a cross-sectional schematic diagram of a machine embodying a first design according to the present disclosure.
Fig. 3 is a cross-sectional schematic diagram of a machine embodying a second design according to the present disclosure.
Fig. 4 is a flowchart of acts in a method of producing the product shown in Fig. 2.

### Description

For the purpose of promoting an understanding of the principles of the present invention, reference will now be made to the embodiment illustrated in the drawings and specific language will be used to describe the same. **It** will, nevertheless, be understood that no limitation of the scope of the invention is thereby intended; any alterations and further modifications of the described or illustrated embodiments, and any further applications of the principles of the invention as illustrated therein are contemplated as would normally occur to one skilled in the art to which the invention relates.

Generally, one form of the disclosed system is an electric machine. The wire(s) that form the windings of the electrical machine are coated with a ceramic insulator, providing a hard, insulating, heat-conductive layer around the conductor and improving heat transfer, durability, and performance.

Turning to Fig. 2, electrical machine 200 comprises stator 210 around rotor 220. Stator 210 has a substantially circular inner diameter 212 and an outer diameter 214. Breaks along inner diameter 212 open into slots 216, through which one or more winding wires 230 go. Each wire 230 has a coating 235 of a ceramic material that has been applied using any of the techniques described herein or that will occur to those skilled in the art.

Those skilled in the art will appreciate that, while three cross-sections of conductors 230 are shown in slot 216, other numbers of windings and/or conductors 230 are used in other embodiments. Likewise, other slot counts and spacing are used in different designs without departing from this invention. Because the conductors 230 are covered with ceramic insulator 235, they avoid electrical connection with each other and with the (typically conductive and grounded) interior of slot 216. Further, because of the hardness of ceramic insulator 235, the interior of slot 216 does not need a slot liner to protect the insulator 235 from wear. Finally, in many embodiments, the thermal conduction properties of insulators 235 help remove heat from conductors 230.

Another electrical machine is shown as machine 300 in Fig. 3. In machine 300, component 310 is separated from complementary component 320 by air gap 330.

### Conductors

340 have ceramic coating 345 and rest along surface 350. Again, ceramic coating 345 protects conductors 340 from physical damage by their contact with component 310 and facilitates transfer of heat (generated by ohmic losses) away from conductors 340.

A variety of ceramic materials are suitable for use in the disclosed system. Those with breakdown temperatures adequate to withstand the temperatures typically generated in the given design, dielectric strength sufficient to insulate the conductors from each other and the machine component, and thermal conductivity sufficient for appropriate cooling in the given design will do. In some embodiments, the ceramic material is hexagonal boron nitride (HBR), aluminum oxide, aluminum nitride, or beryllium oxide. HBR, for example, is harder than steel, so that slot liners are not needed to protect the wire from damage by the machine component. HBR has a dielectric strength of about 35 kV/mm, so a 0.2-0.3 coating would yield 7-10 kV of insulation. HBR has thermal conductivity similar to steel, so heat generated in the wire easily passes through the ceramic to the machine component (stator or rotor) or other heat sink, as will occur those skilled in the art.

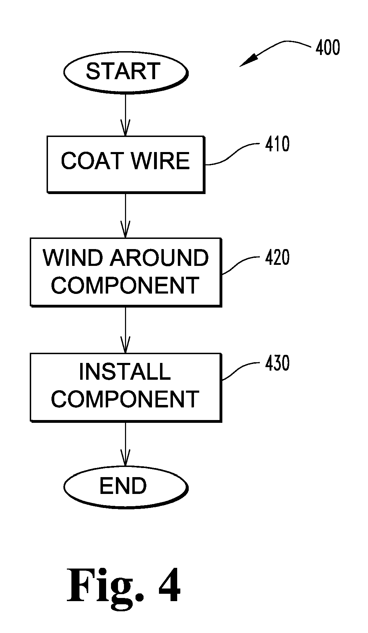

A flowchart illustrating the process of making and the electric machine according to the present disclosure is shown in Fig. 4. Process 400 begins by coating (410) a wire with ceramic material. In some embodiments, coating step 410 comprises rolling, brushing, dipping, or spraying the wire with a solution of the ceramic material in powder form with water (or another solvent) and optionally a binder.

As an example, water-based and solvent-based systems are available from Momentive Performance Materials of Columbus, Ohio, USA, that apply boron nitride (BN) powder. These application systems may use one or more organic binders, one or more inorganic binders, or no binder at all. Each approach has its advantages and disadvantages, as will occur to those skilled in the art:
- Binder-less coatings used in such systems are more chemically pure than some other coatings, but include nothing that tends to adhere the coating to the substrate.
- Organically bound coatings use an organically based cross-linked binder system. When they dry, they handle well, but the binder is stable only up to about 300°C.
- Inorganically bound coatings retain their surface integrity even when used at relatively high temperatures, but sometimes require high-temperature curing.

A variety of such coating systems, binder types, and other variations are available, and one or more of those options might be chosen or specified as a function of the electrical machine design and/or context. For high-temperature machine applications, for example, inorganic binders would be preferred.

In some embodiments, the ceramic coating is applied with a concentration of about 10-40% ceramic with the remainder being solvent and binder. The solvent in some embodiments is water, while in others the solvent is an inorganic compound. The binder in some embodiments is alumina, bentonite, or titanium oxide. The coating is applied to a thickness adequate to serve the dielectric demands of the design, such as a thickness of 0.1-0.3 mm for boron nitride having a dielectric strength of about 30 kV/mm.

After the wire is coated (410), it is wound (420) around the component of the electrical machine. The number and pattern of windings may vary widely from one embodiment to the next depending on the design and purpose of each machine, as will occur to those skilled in the art. Likewise, the wire is formed before coating in some embodiments, while in others, the wire is coated before it is formed. The component is then installed or assembled (430) in the machine.

All publications, prior applications, and other documents cited herein are hereby incorporated by reference in their entirety as if each had been individually incorporated by reference and fully set forth. While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

## Claims

1. An electrical machine, comprising:
a rotor, and
a stator having a conductive winding, the winding being covered along at least part of its length by a ceramic material.

2. The electrical machine of claim 1, wherein the ceramic material that covers adjacent turns of the winding is in physical contact.

3. The electrical machine of claim 2, wherein the physical contact is at the turns of the winding.

4. The electrical machine of claim 2, wherein the physical contact is at a portion of the winding that is straight.

5. The electrical machine of claim 1, wherein the ceramic material is hexagonal boron nitride.

6. The electrical machine of claim 1, wherein the ceramic material is aluminum oxide;
or
wherein the ceramic material is aluminum nitride.

7. The electrical machine of claim 1, wherein the ceramic material is beryllium oxide.

8. The electrical machine of claim 1, wherein the winding is covered by a process comprising the acts of:
dissolving a powder form of the ceramic material with a carrier selected from the carrier class consisting of:
water and
a solvent operative to dissolve the powder form;
applying the dissolved ceramic material to the winding by one or more of the acts of rolling, brushing, dipping, and spraying.

9. An electrical machine, comprising:
a stator, and
a rotor having a conductive winding, the winding being covered along at least part of its length by a ceramic material.

10. The electrical machine of claim 9, wherein the ceramic material that covers adjacent turns of the winding is in physical contact.

11. The electrical machine of claim 10, wherein the physical contact is at the turns of the winding.

12. The electrical machine of claim 10, wherein the physical contact is at a portion of the winding that is straight.

13. The electrical machine of claim 9, wherein the ceramic material is hexagonal boron nitride.

14. The electrical machine of claim 9, wherein the ceramic material is aluminum oxide;
or
wherein the ceramic material is aluminum nitride; or
wherein the ceramic material is beryllium oxide.

15. The electrical machine of claim 9, wherein the winding is covered by a process comprising the acts of:
dissolving a powder form of the ceramic material with a carrier selected from the carrier class consisting of:
water and
a solvent operative to dissolve the powder form;
applying the dissolved ceramic material to the winding by one or more of the acts of rolling, brushing, dipping, and spraying.
